# EUROPÄISCHE PATENTSCHRIFT

(11) **EP 0 752 452 B1**
(45) Veröffentlichungstag und Bekanntmachung des Hinweises auf die Patenterteilung: **12.09.2001**
(21) Anmeldenummer: 96110473.4
(22) Anmeldetag: 28.06.1996
(51) Int. Cl.: C09B 29/42, C09B 29/045

(54) **Hydroxychinolon-Monoazofarbstoffe, ihre Herstellung und Verwendung**
Hydroxyquinolone-monoazo dyes, their preparation and use
Colorants monoazoiques hydroxyquinolones, leur préparation et utilisation

(30) Priorität: 04.07.1995 DE 19524274
(43) Veröffentlichungstag der Anmeldung: 08.01.1997
(73) Patentinhaber: DyStar Textilfarben GmbH & Co. Deutschland KG, 60318 Frankfurt am Main (DE)
(72) Erfinder: Bühler, Ulrich, Dr., 63755 Alzenau (DE)

(56) Entgegenhaltungen:
- EP-A- 0 033 527
- JP-A- 43 015 660
- JP-A- 45 040 190
- JP-A- 46 014 832
- JP-A- 49 080 137
- US-A- 1 969 463
- US-A- 1 969 464
- US-A- 2 529 924

## Beschreibung

Die vorliegende Erfindung betrifft Hydroxychinolon-Monoazofarbstoffe der allgemeinen Formel I,

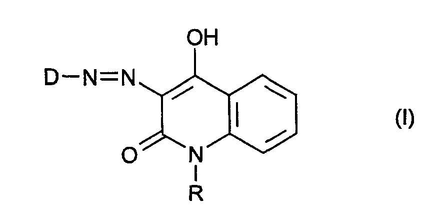

Verfahren zu ihrer Herstellung und ihre Verwendung, insbesondere zum Färben unter alkalischen Bedingungen.

Hydroxychinolon-Azofarbstoffe, darunter insbesondere auch solche, in denen R in der allgemeinen Formel I Wasserstoff bedeutet, sind prinzipiell bereits bekannt und beispielsweise beschrieben in US-A-1 969 463; US-A-1 969 464; US-A-2 529 924; DE-C-1 244 314; DE-C-541 072; H. Waldmann, J. Prakt. Chem. 147 (1937), 321; A. Meyer und R. Vittenet, Ann. Chim. <10> 17 (1932), 271; L. Pentimalli, Chim. Ind. (Milan) 39 (1957), 11; JP-A-49080137 (Chemical Abstracts, 82(10), 140, AN 59895s); JP-A-45040190 (WPI, AN 70-94658r) und JP-A-43015660 (WPI, AN 68-09096q). In der DE-A-3 246 788 wird die Verwendung des bereits aus der DE-C-1 244 314 bekannten, aus 1-Methyl-4-hydroxy-2-chinolon als Kupplungskomponente und 4-Aminoazobenzol als Diazokomponente erhaltenen Bisazofarbstoffes im alkalischen Ätz- bzw. Ätzreservedruck beschrieben.

Die bekannten Hydroxychinolon-Azofarbstoffe weisen aber in verschiedenen Gebrauchsechtheiten, wie Thermofixierechtheit, Lichtechtheit, Wasserechtheit und Lösungsmittelechtheit, und im färberischen Verhalten auf verschiedenen Substraten und unter verschiedenen Färbebedingungen, insbesondere beim Färben im alkalischen Medium, deutliche Mängel auf und erfüllen die heute gestellten Anforderungen nicht. Überraschend wurde nun gefunden, daß die erfindungsgemäßen Hydroxychinolon-Azofarbstoffe gegenüber den bekannten Farbstoffen in den Gebrauchsechtheiten und im färberischen Verhalten wesentliche Vorteile aufweisen. Im Vergleich zu den Bisazofarbstoffen der DE-C-1 244 314 sind sie z.B. nicht phototrop und können mit ihrer neutralen gelben bis grünstichig-gelben Nuance nicht nur als Nuancierkomponente für gedeckte Töne eingesetzt werden, sondern beispielsweise auch als Mischungs-Komponente für klare Grüntöne.

Gegenstand der vorliegenden Erfindung sind Hydroxychinolon-Monoazofarbstoffe der allgemeinen Formel I, 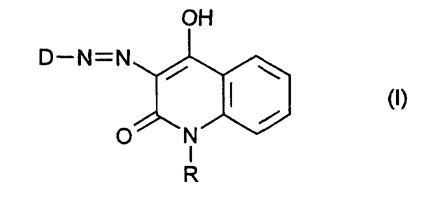 in der
R für (C₁-C₆)-Alkyl, Benzyl oder Phenyl steht oder für (C₂-C₄)-Alkyl steht, das durch Chlor, Brom, (C₁-C₄)-Alkoxy, Phenyl, Phenoxy, durch Methyl, Chlor oder Methoxy mono- oder disubstituiertes Phenyl, oder durch Methyl, Chlor oder Methoxy mono- oder disubstituiertes Phenoxy mono- oder disubstituiert ist;
D für Benzthiazol-2-yl, durch Chlor, Brom, Nitro, Methoxy, Ethoxy, Methyl oder Methylsulfonyl monosubstituiertes oder durch Chlor disubstituiertes Benzthiazol-2-yl oder für einen Phenylrest der allgemeinen Formel II 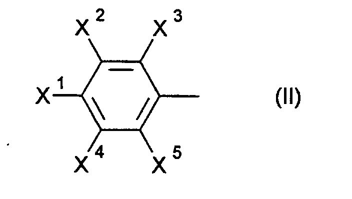 steht;
einer der beiden Reste X¹ und X² für Wasserstoff, Chlor, Brom, Methyl; ((C₁-C₆)-Alkyl)carbonyl, substituiertes ((C₁-C₆)-Alkyl)-carbonyl, Cyclohexylcarbonyl, Phenylcarbonyl, substituiertes Phenylcarbonyl; Phenylsulfonyl, substituiertes Phenylsulfonyl;
N-((C₁-C₆)-Alkyl)aminocarbonyl, im Alkylrest substituiertes N-((C₁-C₆)-Alkyl)aminocarbonyl, N-Cyclohexylaminocarbonyl, N-Allylaminocarbonyl, N-Phenylaminocarbonyl, im Phenylrest substituiertes N-Phenylaminocarbonyl; N,N-Di-((C₁-C₆)-alkyl)aminocarbonyl, in einem der beiden Alkylreste substituiertes N,N-Di-((C₁-C₆)-alkyl)aminocarbonyl, in beiden Alkylresten substituiertes N,N-Di-((C₁-C₆)-alkyl)aminocarbonyl, N-Phenyl-N-((C₁-C₆)-alkyl)aminocarbonyl, im Alkylrest substituiertes N-Phenyl-N-((C₁-C₆)-alkyl)aminocarbonyl, im Phenylrest substituiertes N-Phenyl-N-((C₁-C₆)-alkyl)aminocarbonyl, im Alkylrest und im Phenylrest substituiertes N-Phenyl-N-((C₁-C₆)alkyl)aminocarbonyl, N,N-Diallylaminocarbonyl, N-Allyl-N-((C₁-C₆)-alkyl)aminocarbonyl, im Alkylrest substituiertes N-Allyl-N-((C₁-C₆)-alkyl)aminocarbonyl, N-Allyl-N-phenylaminocarbonyl, im Phenylrest substituiertes N-Allyl-N-phenylaminocarbonyl, N,N-Dicyclohexylaminocarbonyl, N-Cyclohexyl-N-((C₁-C₆)-alkyl)aminocarbonyl, im Alkylrest substituiertes N-Cyclohexyl-N-((C₁-C₆)-alkyl)aminocarbonyl, N-Cyclohexyl-N-phenylaminocarbonyl, im Phenylrest substituiertes N-Cyclohexyl-N-phenylaminocarbonyl, N-Cyclohexyl-N-allylaminocarbonyl; steht;
und der andere der beiden Reste X¹ und X² für Wasserstoff, Chlor, Brom oder Methyl steht und X¹ zusätzlich auch für (C₂-C₄)-Alkyl, Fluor, Phenyl, Benzyl, Cyclohexyl oder (C₂-C₄)-Alkoxy steht;
X³ für Wasserstoff, Chlor, Brom, Nitro oder Methyl steht;
X⁴ und X⁵ unabhängig voneinander für Wasserstoff, Chlor oder Methyl stehen;
wobei mindestens einer der Reste X¹, X², X³, X⁴ und X⁵ eine andere Bedeutung als Wasserstoff hat und wobei, wenn gleichzeitig X³ für Nitro und X², X⁴ und X⁵ für Wasserstoff stehen, X¹ eine andere Bedeutung als Wasserstoff, Chlor, Brom, Methyl oder Acetyl hat und wobei der Phenylrest der allgemeinen Formel II nicht für 3,4-Dichlorphenyl stehen kann.

Sind in den für X¹ oder X² stehenden Resten mehrere substituierte oder unsubstituierte Alkylreste enthalten, so können diese gleich oder verschieden sein.

Alkyl- und Alkoxygruppen können geradkettig oder verzweigt sein, wobei primär verzweigte Gruppen (i-Alkylgruppen) bevorzugt und geradkettige besonders bevorzugt sind.

(C₁-C₄)-Alkyl ist beispielsweise Methyl, Ethyl, n-Propyl, i-Propyl, n-Butyl, i-Butyl, sek.Butyl, und tert.-Butyl. (C₁-C₆)-Alkyl kann darüberhinaus z.B. für n-Pentyl, i-Pentyl, sek.Pentyl, n-Hexyl und i-Hexyl stehen. Diese Beispiele gelten entsprechend z.B. für (C₂-C₄)-Alkyl, (C₃-C₄)-Alkyl, etc., für die jeweiligen substituierten Alkylreste und für die jeweiligen Alkoxyreste.

Substituenten in den substituierten Alkylresten, die in den Resten X¹ oder X² enthalten sein können, sind beispielsweise Chlor, Brom, (C₁-C₄)-Alkoxy, Phenyl und Phenoxy. Die Anzahl der Substituenten in den substituierten Alkylresten beträgt bevorzugt 1 bis 3, besonders bevorzugt 1. In für R stehenden substituierten Alkylresten ist die Zahl der Substituenten bevorzugt 1. Bei Mehrfachsubstitution können die Substituenten gleich oder verschieden sein.

Beispiele für durch Chlor oder Brom substituiertes (C₁-C₄)-Alkyl sind Chlormethyl, Brommethyl, 2-Chlorethyl, 2-Bromethyl, 3-Chlorpropyl, 3-Brompropyl, 4-Chlorbutyl, 4-Brombutyl, 2,3-Dichlorpropyl, für durch Chlor und Brom substituiertes (C₁-C₆)-Alkyl darüberhinaus z.B. 6-Chlorhexyl und 6-Bromhexyl.

Durch (C₁-C₄)-Alkoxy substituiertes (C₁-C₄)-Alkyl ist beispielsweise Methoxymethyl, Ethoxymethyl, n-Butoxymethyl, 2-Methoxy-, 2-Ethoxy-, 2-n-Propoxy-, 2-i-Propoxy-, 2-n-Butoxy, 2-i-Butoxy-, 2-sek.Butoxy-, 2-tert.-Butoxyethyl, 3-Methoxy-, 3-Ethoxy-, 3-n-Propoxy-, 3-i-Propoxy-, 3-n-Butoxy-, 3-sek.Butoxypropyl, 4-Methoxy-, 4-Ethoxy-, 4-n-Propoxy-, 4-n-Butoxybutyl, 2,3-Dimethoxypropyl, 3-Ethoxy-2-methoxypropyl, durch (C₁-C₄)-Alkoxy substituiertes (C₁-C₆)-Alkyl ist darüberhinaus beispielsweise 6-Methoxy-oder 6-Ethoxyhexyl.

Durch Phenoxy oder Phenyl substituiertes (C₁-C₄)-Alkyl ist beispielsweise Phenoxymethyl, -ethyl, -propyl und -butyl, Benzyl, Phenethyl und Phenpropyl, wobei primär verzweigtes Alkyl bevorzugt und lineares Alkyl besonders bevorzugt ist. Durch Phenoxy oder Phenyl substituiertes (C₁-C₆)-Alkyl ist darüberhinaus beispielsweise 6-Phenoxy- bzw. 6-Phenylhexyl.

Diese Beispiele gelten entsprechend z.B. für substituiertes (C₂-C₄)-Alkyl, (C₃-C₄)-Alkyl, etc.

Substituenten in den substituierten Phenylresten, die in X¹ oder X² enthalten sein können, sind beispielsweise Fluor, Chlor, Brom, (C₁-C₄)-Alkyl und (C₁-C₄)-Alkoxy. Die Anzahl der Substituenten in dem substituierten Phenylrest beträgt bevorzugt 1 bis 3, besonders bevorzugt 1 oder 2, ganz besonders bevorzugt 1. In substituierten Phenylresten, die in R enthalten sind, ist die Anzahl der Subtituenten bevorzugt 1. Bei Mehrfachsubstitution können die Substituenten gleich oder verschieden sein. Ein einzelner Substituent kann in der ortho-, der meta- oder der para-Position stehen, bevorzugt steht er in der meta- oder insbesondere in der para-Position. Zwei Substituenten können sich beispielsweise in 2,3-, 2,4-, 2,5-, 2,6-, 3,4- oder 3,5-Position befinden.

Beispiele für substituiertes Phenyl sind 2-, 3- und 4-Fluorphenyl, 2-, 3- und 4-Chlorphenyl, 2-, 3- und 4-Bromphenyl, 2-, 3- und 4-Methylphenyl, 4-lsopropylphenyl, 4-lsobutylphenyl, 4-n-Butylphenyl, 4-tert-Butylphenyl, 2-, 3- und 4-Methoxyphenyl, 2-, 3- und 4-Ethoxyphenyl, 2-, 3- und 4-n-Butoxyphenyl, 2,3-Dichlorphenyl, 2,4-Dichlorphenyl, 2,5-Dichlorphenyl, 3,4-Dichlorphenyl, 3,5-Dichlorphenyl, 2,3-Dimethylphenyl, 2,4-Dimethylphenyl, 3,4-Dimethylphenyl, 2,5-Dimethylphenyl, 2-Chlor-4-methylphenyl, 3-Chlor-4-methylphenyl, 4-Chlor-2-methylphenyl, 2,4-Dimethoxyphenyl, 3,4-Dimethoxyphenyl, 3-Methyl-4-methoxyphenyl, 2,4,5-Trimethylphenyl.

Phenoxysubstituenten sind vorzugsweise unsubstituiert. Bei Substitution durch Phenyl- oder Phenoxyreste ist die Anzahl dieser Reste am Chromophor insgesamt vorzugsweise 1.

Beispiele für substituierte Benzthiazol-2-yl-Reste, die für D stehen können, sind 5- und 6-Nitrobenzthiazol-2-yl, 6-Methoxy- und 6-Ethoxybenzthiazol-2-yl, 6-Methylbenzthiazol-2-yl, 6-Methylsulfonylbenzthiazol-2-yl, 5-, 6-und 7-Chlorbenzthiazol-2-yl, 5-, 6- und 7-Brombenzthiazol-2-yl, 5,6- und 6,7-Dichlorbenzthiazol-2-yl.

R steht bevorzugt für unsubstituiertes Alkyl, besonders bevorzugt für (C₁-C₄)-Alkyl, ganz besonders bevorzugt für (C₁-C₂)-Alkyl, darüberhinaus bevorzugt für Methyl.

D steht bevorzugt für einen Phenylrest der allgemeinen Formel II.

Bevorzugte Substituenten in substituierten Alkylresten, die in X¹ oder X² enthalten sind, sind (C₃-C₄)-Alkoxy und Phenyl. Bevorzugt sind Alkylreste, die in X¹ oder X² enthalten sind, jedoch unsubstituiert. Besonders bevorzugt handelt es sich bei Alkylgruppen, die in den für X¹ oder X² stehenden Alkylcarbonyl- und den alkylsubstituierten Aminocarbonyl gruppen enthalten sind, um unsubstituierte (C₂-C₆)-Alkylreste, ganz besonders bevorzugt um (C₄-C₆)-Alkylreste.

Alkylgruppen sind bevorzugt lineare Gruppen oder primär verzweigte Gruppen (Isoalkylgruppen), besonders bevorzugt lineare Gruppen. Unter den substituierten Alkylgruppen sind substituierte (C₂-C₆)-Alkylgruppen bevorzugt.

Unter den für X¹ oder X² stehenden Aminocarbonylgruppen sind N,N-disubstituierte Aminocarbonylgruppen bevorzugt.

Bevorzugte Substituenten an für X¹ oder X² stehenden Aminocarbonyl Aminosulfonylgruppen sind Alkyl und Allyl. Besonders bevorzugt sind für X¹ oder X² stehende Aminocarbonyl gruppen durch Alkylreste N,N-disubstituiert.

Bevorzugt ist die Summe der Kohlenstoffatome der Alkyl- und Allylreste in für X¹ oder X² stehenden, durch Alkyl- und Allylgruppen N,N-disubstituierten Aminocarbonyl gruppen 4 bis 12, besonders bevorzugt 6 bis 10.

Bevorzugt steht einer der beiden Reste X¹ und X² in dem für D stehenden Phenylrest der allgemeinen Formel II für Wasserstoff, Chlor, (C₂-C₆)-Alkylcarbonyl, substituiertes (C₂-C₆)-Alkylcarbonyl, Phenylcarbonyl, substituiertes Phenylcarbonyl, Phenylsulfonyl, substituiertes Phenylsulfonyl oder einen N,N-disubstituierten Aminocarbonyl rest und der andere der beiden Reste X¹ und X² für Wasserstoff oder Chlor.

Besonders bevorzugt steht X¹ für (C₄-C₆)-Alkylcarbonyl, substituiertes (C₄-C₆)-Alkylcarbonyl, Phenylcarbonyl, substituiertes Phenylcarbonyl, Phenylsulfonyl, substituiertes Phenylsulfonyl, N,N-Di-((C₄-C₆)-alkyl)aminocarbonyl, in einem der Alkylreste substituiertes N,N-Di-((C₄-C₆)-alkyl)aminocarbonyl, in beiden Alkylresten substituiertes N,N-Di-((C₄-C₆)-alkyl)aminocarbonyl, und X² für Wasserstoff, oder X² für (C₄-C₆)-Alkylcarbonyl, substituiertes (C₄-C₆)-Alkylcarbonyl, Phenylcarbonyl, substituiertes Phenylcarbonyl, Phenylsulfonyl, substituiertes Phenylsulfonyl, N,N-Di-((C₄-C₆)-alkyl)aminocarbonyl, in einem der Alkylreste substituiertes N,N-Di-((C₄-C₆)-alkyl)aminocarbonyl, in beiden Alkylresten substituiertes N,N-Di-((C₄-C₆)-alkyl)-aminocarbonyl, und X¹ für Wasserstoff, wobei darüber hinaus bevorzugt die bevorzugten Bedeutungen für Alkyl gelten. Ganz besonders bevorzugt steht X¹ für Phenylcarbonyl oder substituiertes Phenylcarbonyl und X² für Wasserstoff, oder X² für Phenylcarbonyl oder substituiertes Phenylcarbonyl und X¹ für Wasserstoff, wobei darüberhinaus bevorzugt substituiertes Phenylcarbonyl durch Alkyl substituiertes Phenylcarbonyl bedeutet.

Noch mehr bevorzugt ist es, wenn X¹ eine der für X¹ oder X² als ganz besonders bevorzugten Bedeutungen hat und X² für Wasserstoff steht.

Bevorzugt stehen in dem für D stehenden Phenylrest der allgemeinen Formel II unabhängig voneinander X³ für Wasserstoff, Nitro oder Chlor, X⁴ für Wasserstoff oder Chlor und X⁵ für Wasserstoff.

Bevorzugte Verbindungen der allgemeinen Formel I sind solche, in denen einer oder mehrere Reste bevorzugte Bedeutungen haben. Besonders bevorzugt sind Verbindungen der allgemeinen Formel I, in der D für einen Phenylrest der allgemeinen Formel II steht, in der die folgenden Kombinationen von Bedeutungen der Reste X¹/X²/X³/X⁴/X⁵ vorliegen:
(C₁-C₆)-Alkylcarbonyl/Wasserstoff/Wasserstoff/Wasserstoff/Wasserstoff; substituiertes (C₁-C₆)-Alkylcarbonyl/Wasserstoff/Wasserstoff/Wasserstoff/ Wasserstoff;
Phenylsulfonyl/Wasserstoff/Wasserstoff/Wasserstoff/Wasserstoff;
substituiertes Phenylsulfonyl/Wasserstoff/Wasserstoff/Wasserstoff/Wasserstoff;
Wasserstoff/(C₁-C₆)-Alkylcarbonyl/Wasserstoff/Wasserstoff/Wasserstoff;
Wasserstoff/substituiertes (C₁-C₆)-Alkylcarbonyl/Wasserstoff/Wasserstoff/ Wasserstoff;
Wasserstoff/Phenylsulfonyl/Wasserstoff/Wasserstoff/Wasserstoff;
Wasserstoff/substituiertes Phenylsulfonyl/Wasserstoff/Wasserstoff/Wasserstoff;
Phenylcarbonyl/Wasserstoff/Nitro/Wasserstoff/Wasserstoff;
substituiertes Phenylcarbonyl/Wasserstoff/Nitro/Wasserstoff/Wasserstoff;
N,N-Di-((C₁-C₆)-alkyl)aminocarbonyl/Wasserstoff/Nitro/Wasserstoff/Wasserstoff; in einem der Alkylreste substituiertes N,N-Di-((C₁-C₆)-alkyl)aminocarbonyl/Wasserstoff/Nitro/Wasserstoff/Wasserstoff;
in beiden Alkylresten substituiertes N,N-Di-((C₁-C₆)-alkyl)aminocarbonyl/Wasserstoff/Nitro/Wasserstoff/Wasserstoff;
und insbesondere
Phenylcarbonyl/Wasserstoff/Wasserstoff/Wasserstoff/Wasserstoff;
substituiertes Phenylcarbonyl/Wasserstoff/Wasserstoff/ Wasserstoff/Wasserstoff;
Wasserstoff/Phenylcarbonyl/Wasserstoff/Wasserstoff/Wasserstoff;
Wasserstoff/substituiertes Phenylcarbonyl/Wasserstoff/ Wasserstoff/Wasserstoff;
N,N-Di-((C₁-C₆)-alkyl)aminocarbonyl/Wasserstoff/Wasserstoff/Wasserstoff/ Wasserstoff;
in einem der Alkylreste substituiertes N,N-Di-((C₁-C₆)-alkyl)aminocarbonyl/Wasserstoff/Wasserstoff/Wasserstoff/Wasserstoff;
in beiden Alkylresten substituiertes N,N-Di-((C₁-C₆)-alkyl)aminocarbonyl/Wasserstoff/Wasserstoff/Wasserstoff/ Wasserstoff;
Wasserstoff/N,N-Di-((C₁-C₆)-Alkyl)aminocarbonyl/Wasserstoff/Wasserstoff/ Wasserstoff;
Wasserstoff/in einem Alkylrest substituiertes N,N-Di-((C₁-C₆)-alkyl)aminocarbonyl/Wasserstoff/Wasserstoff/Wasserstoff;
Wasserstoff/in beiden Alkylresten substituiertes N,N-Di-((C₁-C₆)-alkyl)aminocarbonyl/Wasserstoff/Wasserstoff/Wasserstoff;
wobei darüber hinaus bevorzugte Verbindungen solche sind, in denen Alkylreste bevorzugte Bedeutungen haben.

Die vorliegende Erfindung betrifft auch Mischungen von mindestens zwei Hydroxychinolon-Monoazofarbstoffen der allgemeinen Formel I.

Die erfindungsgemäßen Farbstoffmischungen bestehen bevorzugt aus 2 bis 4, besonders bevorzugt aus 2 Komponenten. In den erfindungsgemäßen Farbstoffmischungen kann das Verhältnis der verschiedenen Farbstoffe der allgemeinen Formel I in relativ weiten Grenzen variieren. Im allgemeinen beträgt der Mindestgewichtsanteil einer Komponente 10 % und ihr maximaler Gewichtsanteil 90 %. Bei Farbstoffmischungen, die nur aus zwei Farbstoffen der allgemeinen Formel I bestehen, ist ein Gewichtsverhältnis von 70 : 30 bis 30 : 70 bevorzugt, d.h. der Gewichtsanteil eines Farbstoffs beträgt 30 bis 70 %.

Bevorzugt unterscheiden sich die Komponenten in der Bedeutung des Restes R und/oder in der Bedeutung von in X¹ oder X² enthaltenen Alkylgruppen bzw. in der Bedeutung von Substituenten an Phenylresten, die in X¹ oder X² enthalten sind.

Eine weitere Ausführungsform der vorliegenden Erfindung betrifft Mischungen von einem oder mehreren der Farbstoffe der allgemeinen Formel I mit einem oder mehreren Farbstoffen, wie sie üblicherweise zum Färben von hydrophoben synthetischen Materialien und diese enthaltenden Mischgeweben verwendet werden.

Die Herstellung der erfindungsgemäßen Farbstoffe der allgemeinen Formel I erfolgt vorzugsweise dadurch, daß man eine Verbindung der allgemeinen Formel III,

D-NH₂ (III)

worin D wie oben angegeben definiert ist, diazotiert und auf eine Verbindung der allgemeinen Formel IV, 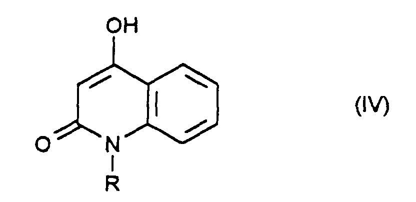 worin R wie oben angegeben definiert ist, kuppelt.

Die Verbindungen der allgemeinen Formel III und IV sind größtenteils bekannt und können nach dem Fachmann bekannten Methoden hergestellt werden.

Die Diazotierung und Kupplung kann nach dem Fachmann bekannten Methoden beispielsweise in Analogie zu den Methoden, wie sie in US-A-2 529 924 oder US-A-1 969 463 beschrieben sind, erfolgen.

Die erfindungsgemäßen Farbstoffe der allgemeinen Formel I bzw. die erfindungsgemäßen Mischungen werden vor dem Färben formiert, d.h. sie werden in Gegenwart von Wasser und von Dispergiermitteln in geeigneten Mühlen, wie z.B. Kugel- oder Sandmühlen, gemahlen und, wenn eine pulverförmige Farbstoff-Formierung hergestellt werden soll, anschließend z.B. sprühgetrocknet.

Geeignete Dispergiermittel sind z.B. anionische oder nichtionische Dispergiermittel, die auch gemeinsam eingesetzt werden können.

Anionische Dispergiermittel sind z.B. Kondensationsprodukte aus aromatischen Sulfonsäuren und Formaldehyd, insbesondere Kondensationsprodukte aus Alkylnaphthalinsulfonsäuren und Formaldehyd, Kondensationsprodukte aus gegebenenfalls substituiertem Phenol mit Formaldehyd und Natriumbisulfit, Alkalimetallsalze von Kondensationsprodukten aus gegebenenfalls substituiertem Phenol, Naphthalin- bzw. Naphtholsulfonsäuren, Formaldehyd und Natriumbisulfit, Alkalimetallsalze von Kondensationsprodukten aus gegebenenfalls substituierten Phenolsulfonsäuren, Formaldehyd und Harnstoff sowie Alkalimetallsalze von Ligninsulfonsäuren; Alkyl- oder Alkylaryl-sulfonate, sowie Alkyl-aryl-polyglykolethersulfate.

Nichtionische Dispergiermittel oder Emulgatoren sind z.B. Umsetzungsprodukte von Alkylenoxiden, wie z.B. Ethylen- oder Propylenoxid, mit alkylierbaren Verbindungen, wie z.B. Fettalkoholen, Fettaminen, Fettsäuren, Phenolen, Alkylphenolen, Arylalkylphenolen, Arylalkylarylphenolen und Carbonsäureamiden, wie z.B. Anlagerungsprodukte von 5 bis 10 Ethylenoxid-Einheiten an (C₈-C₁₀)-Alkylphenole.

Die Mahlung erfolgt bei Temperaturen zwischen 10 und 90°C, vorzugsweise bei 30 bis 60°C. Bei der gemeinsamen Formierung getrennt hergestellter Einzelkomponenten ist die gemeinsame Mahlung bei Temperaturen über 30°C vorteilhaft. Die Farbstoffteilchen werden dabei mechanisch so weit zerkleinert, daß eine optimale spezifische Oberfläche erreicht wird und die Sedimentation des Farbstoffs möglichst gering ist. Die Teilchengrößen der Farbstoffe liegen im allgemeinen zwischen 0,5 und 5 *µ*m, vorzugsweise bei etwa 1 *µ*m.

Die erfindungsgemäßen Farbstoffmischungen können nach verschiedenen Verfahren hergestellt werden, z.B. durch Mischen der getrennt hergestellten Einzelfarbstoffe, wobei bevorzugt bereits formierte Einzelfarbstoffe gemischt werden. Dieser Mischprozeß erfolgt in geeigneten Mischern, wie z.B. Taumelmischern oder Rührwerken. Getrennt formierte Einzelfarbstoffe können aber auch durch Einrühren in Färbeflotten gemischt werden.

Erfindungsgemäße Farbstoffmischungen können weiterhin bevorzugt durch gemeinsame Formierung der getrennt hergestellten Mischungskomponenten, d.h. durch gemeinsame Mahlung und/oder z.B. Sprühtrocknung, hergestellt werden.

Die erfindungsgemäßen Farbstoffe und Farbstoffmischungen sind einzeln oder im Gemisch mit anderen Dispersionsfarbstoffen vorzüglich zum Färben und Bedrucken von hydrophoben synthetischen Materialien geeignet. Als hydrophobe synthetische Materialien kommen z.B. in Betracht: Cellulose-2 1/2-acetat, Cellulosetriacetat, Polyamide und hochmolekulare Polyester. Vorzugsweise werden die erfindungsgemäßen Farbstoffe zum Färben und Bedrucken von Materialien aus hochmolekularen Polyestern, insbesondere solchen auf Basis von Polyethylenglykolterephthalaten oder deren Mischungen mit natürlichen Faserstoffen, oder von Materialien aus Zellulosetriacetat eingesetzt.

Die hydrophoben synthetischen Materialien können in Form von flächen- oder fadenförmigen Gebilden vorliegen und z.B. zu Garnen oder gewebten, gewirkten oder gestrickten Textilstoffen verarbeitet sein. Das Färben des genannten Fasergutes mit den erfindungsgemäßen Farbstoffen oder Farbstoffmischungen kann in an sich bekannter Weise erfolgen, vorzugsweise aus wäßriger Dispersion, gegebenenfalls in Gegenwart von Carriern, zwischen 80 bis ca. 110°C nach dem Ausziehverfahren oder nach dem HT-Verfahren im Färbeautoklav bei 110 bis 140°C, sowie nach dem sogenannten Thermofixierverfahren, wobei die Ware mit der Färbeflotte geklotzt und anschließend bei etwa 180 bis 230°C fixiert wird. Das Bedrucken der genannten Materialien kann in an sich bekannter Weise so durchgeführt werden, daß die erfindungsgemäßen Farbstoffe oder Farbstoffmischungen in eine Druckpaste einverleibt werden und die damit bedruckte Ware zur Fixierung des Farbstoffs, gegebenenfalls in Gegenwart eines Carriers, bei Temperaturen zwischen 180 bis 230°C mit HT-Dampf, Druckdampf oder Trockenhitze behandelt wird. Man erhält auf diese Weise sehr farbstarke Färbungen mit sehr guten Gebrauchsechtheiten, wie Thermofixier-, Wasch-, Wasser- und Thermomigrierechtheit sowie insbesondere einer sehr guten Lichtechtheit.

Die erfindungsgemäßen Farbstoffe und Farbstoffmischungen eignen sich weiter ganz besonders zum Färben und Bedrucken von alkalisierten Polyesterfasern und Polyestermikrofasern. Einzelheiten dazu sind beispielsweise beschrieben in Chemiefasern/Textilindustrie 41./93. Jahrgang, Sept. 1991, S. 1118; Textilveredlung 28 (1993), S. 88, und Textilveredlung 28 (1993), S. 96).

Die erfindungsgemäßen Farbstoffe und Farbstoffmischungen eignen sich weiter ganz besonders zum Färben von Polyesterfasern und Polyesterfasermaterialien im alkalischen Medium bei pH-Werten bis pH 11, insbesondere bei pH 8 bis pH 11. Einzelheiten zu dieser Färbemethode sind beispielsweise in der DE-A-3 938 631 oder der EP-A-499 090 beschrieben.

Die erfindungsgemäßen Farbstoffe oder Farbstoffmischungen eignen sich auch zum Färben der vorstehend aufgeführten hydrophoben Materialien aus organischen Lösungsmitteln nach den hierbei bekannten Methoden.

In den bei obigen Applikationen eingesetzten Färbeflotten und Druckpasten sollen die erfindungsgemäßen Farbstoffe bzw. Farbstoffmischungen in möglichst feiner Verteilung vorliegen. Die Feinverteilung der Farbstoffe erfolgt in an sich bekannter Weise dadurch, daß man den in der Fabrikation anfallenden Farbstoff zusammen mit Dispergiermitteln in einem flüssigen Medium, vorzugsweise in Wasser, aufschlämmt und die Mischung der Einwirkung von Scherkräften aussetzt, wobei die ursprünglich vorhandenen Farbstoff-Teilchen mechanisch so weit zerkleinert werden, daß eine optimale spezifische Oberfläche erreicht wird und die Sedimentation des Farbstoffs möglichst gering ist. Die Teilchengrößen der Farbstoffe liegt im allgemeinen zwischen 0,5 und 5 µm, vorzugsweise bei etwa 1 µm.

Die bei dem Mahlvorgang mitverwendeten Dispergiermittel können nichtionogen oder anionaktiv sein. Nichtionogene Dispergiermittel sind z.B. Umsetzungsprodukte von Alkylenoxiden, wie z.B. Ethylen- oder Propylenoxid, mit alkylierbaren Verbindungen, wie z.B. Fettalkoholen, Fettaminen, Fettsäuren, Phenolen, Alkylphenolen und Carbonsäureamiden. Anionaktive Dispergiermittel sind beispielsweise Ligninsulfonate, Alkyl- oder Alkylarylsulfonate oder Alkylaryl-polyglykolethersulfate.

Die so erhaltenen Farbstoffzubereitungen sollen für die meisten Anwendungsweisen gießbar sein. Der Farbstoff- und Dispergiermittelgehalt ist daher in diesen Fällen limitiert. Im allgemeinen werden die Dispersionen auf einen Farbstoffgehalt bis zu 50 Gewichtsprozent und einen Dispergiermittelgehalt bis zu etwa 25 % eingestellt. Aus ökonomischen Gründen werden Farbstoffgehalte von 15 Gewichtsprozent meist nicht unterschritten.

Die Dispersionen können auch noch weitere Hilfsmittel enthalten, z.B. solche, die als Oxidationsmittel wirken, wie z.B. Natrium-m-nitrobenzolsulfonat, oder fungicide Mittel, wie z.B. Natrium-o-phenyl-phenolat, oder Feuchthaltemittel, wie 1,2-Propandiol.

Die so erhaltenen Farbstoffdispersionen können sehr vorteilhaft zum Ansatz von Druckpasten und Färbeflotten verwendet werden.

Für gewisse Anwendungsbereiche werden Pulvereinstellungen bevorzugt. Diese Pulver enthalten den Farbstoff oder das Farbstoffgemisch, Dispergiermittel und andere Hilfsmittel, wie z.B. Netz-, Oxidations-, Konservierungs- und Entstaubungsmittel.

Ein bevorzugtes Herstellungsverfahren für pulverförmige Farbstoffzubereitungen besteht darin, daß den oben beschriebenen flüssigen Farbstoffdispersionen die Flüssigkeit entzogen wird, z.B. durch Vakuumtrocknung, Gefriertrocknung, durch Trocknung auf Walzentrocknern, vorzugsweise aber durch Sprühtrocknung.

Zur Herstellung der Färbeflotten werden die erforderlichen Mengen der Farbstoffeinstellungen, die gemäß den obigen Angaben hergestellt wurden, mit dem Färbemedium, vorzugsweise mit Wasser, so weit verdünnt, daß sich für die Färbung ein Flottenverhältnis von im allgemeinen 1:5 bis 1:50 ergibt. Zusätzlich werden den Flotten im allgemeinen weitere Färbereihilfsmittel, wie Dispergier-, Netz- und Fixierhilfsmittel zugesetzt. Beispielsweise kann auch durch Zugabe von organischen oder anorganischen Säuren wie Essigsäure, Bernsteinsäure, Borsäure oder Phosphorsäure z.B. ein pH-Wert von 4 bis 5 eingestellt werden.

Beim Färben unter alkalischen Bedingungen kann der erforderliche pH-Wert der Färbeflotte vor bzw. auch während des Färbens beispielsweise durch Zugabe von Basen, wie Alkalihydroxiden, z.B. wäßriger Natronlauge, Alkalihydrogencarbonaten, z.B. Natriumhydrogencarbonat, oder Alkalicarbonaten, z.B. Soda, eingestellt werden.

Um pH-Schwankungen zu minimieren, werden vorzugsweise Puffersubstanzen zugesetzt, wie sie z.B. in JSDC 77 (1979), S. 47, oder JSDC 79 (1981), S. 115, beschrieben sind. Für das Färben unter alkalischen Bedingungen besonders geeignete Puffersubstanzen sind solche, die im pH-Bereich zwischen 8 und 11 die größte Pufferwirkung besitzen. Geeignete Puffersysteme sind z.B. Essigsäure/Natriumpyrophosphat, Borsäure/Borax, Natriumhydrogencarbonat/Natriumcarbonat, Natriumdihydrogenphosphat/ Dinatriumhydrogenphosphat, Kombinationen aus Phosphorsäure, Bernsteinsäure und Borsäure und Salzen dieser Säuren oder Kombinationen organischer Phosphorverbindungen mit Polycarbonsäuren in Gegenwart ihrer Salze. Die Einsatzmengen an Puffersystem liegen vorzugsweise zwischen 0,5 und 10 g/l.

Als Puffersysteme können auch die in der DE-A-3 938 631 beschriebenen Aminosäuren in der dort beschriebenen Weise eingesetzt werden.

Soll der Farbstoff oder die Farbstoffmischung für den Textildruck herangezogen werden, so werden die erforderlichen Mengen der Farbstoffeinstellungen in an sich bekannter Weise zusammen mit Verdickungsmitteln, wie z.B. Alkali-Alginaten oder dergleichen, und gegebenenfalls weiteren Zusätzen, wie z.B. Fixierbeschleunigern, Netzmitteln und Oxidationsmitteln, zu Druckpasten verknetet.

Die erfindungsgemäßen Farbstoffe und Farbstoffmischungen bieten im Vergleich zu den gelben Farbstoffen des Handels überraschenderweise deutliche Vorteile, insbesondere bezüglich Aufbau- und Ausziehverhalten. Mit ihnen lassen sich größere Farbtiefen erzielen und sie sind ökonomischer, da sie vollständiger auf das Färbegut aufziehen und das Abwasser weniger stark belasten. Ihre Temperaturempfindlichkeit ist geringer, das heißt die Farbtiefenschwankungen bei Schwankungen der Färbetemperatur sind kleiner. Sie färben auch bei verkürzter Färbezeit und ziehen auf Substrate wie beispielsweise modifiziertes Polyester, Polyamid, Cellulosetriacetat und Cellulose2 1/2-acetat auf. Sie ergeben auch bei hohen Wickeldichten des Substrats und bei kurzen Flottenverhältnissen egale, reproduzierbare Färbungen.

Insbesondere besitzen sie eine sehr hohe Alkalistabilität und lassen sich aus wäßrigem Färbebad bei pH-Werten bis 11 färben, ohne daß es zu Farbstärkeverlusten oder Farbtonschwankungen kommt. Auf diese Weise können in einem einbadigen Prozess oligomerenfreie gefärbte faden- oder flächenförmige, insbesondere fadenförmige Polyestertextilmaterialien erhalten werden.

Insgesamt ergibt sich somit für die erfindungsgemäßen Farbstoffe und Farbstoffmischungen ein nicht vorhersehbarer erheblicher anwendungstechnischer Vorteil im Vergleich zum Stand der Technik.

Die Erfindung wird durch die folgenden Beispiele näher erläutert. Prozentangaben sind Gewichtsprozente.

### Beispiel 1

a) 23,9 g 4-Amino-4'-isopropyl-benzophenon werden in 150 ml Wasser mit 30 ml konzentrierter Salzsäure über Nacht angeschlagen, mit 150 ml Wasser verdünnt und bei 0 bis 5°C in 30 Minuten mit einer Lösung aus 7,7 g Natriumnitrit in 50 ml Wasser diazotiert. Nach beendeter Diazotierung wird die Diazolösung filtriert. Unterdessen wurden 18,4 g 1-Methyl-4-hydroxy-2-chinolon in 200 ml Wasser durch Zugabe von 32 g einer 27%igen Natronlauge gelöst. Zu dieser Lösung wird bei 20 bis 25°C innerhalb von ca. 90 Minuten die obigen Diazolösung zugetropft und die Kupplungssuspension zur Beendigung der Kupplung über Nacht nachgerührt. Dann wird der ausgefallene Farbstoff abfiltriert, mit Wasser gewaschen, trockengeblasen und anschließend aus 500 ml Methanol umkristallisiert. Es wurden 27,9 g des Farbstoffs der Formel la 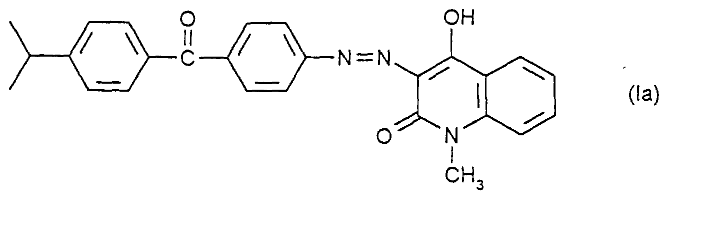 erhalten, der sich in o-Dichlorbenzol mit gelber Farbe löst, bei 193 - 195°C schmilzt und in Phthalsäurediethylester bei 430 nm sein Absorptionsmaximum hat.
b) 100 g eines Gewebes aus Polyethylenglykolterephthalat werden mit einer Färbeflotte, bestehend aus 2 I Wasser, 1,5 g einer 20%igen flüssigen Präparation des Farbstoffs der Formel la, 2 g eines Färbereihilfsmittels auf Basis Formaldehydkondensationsprodukt und 5 g einer Puffersubstanz, die eine Mischung aus einer organischen Phosphorverbindung und einer Polycarbonsäure dargestellt, in einem Färbeautoklaven 45 Minuten bei 130°C gefärbt, nachdem vorher der pH-Wert der Färbeflotte mit wäßriger Natronlauge auf 10 gestellt wurde. Danach wird die Färbung gespült, reduktiv gereinigt, wieder gespült und getrocknet. Man erhält so eine grünstichig gelbe Färbung.

Die Färbung wird wiederholt, wobei als Puffersubstanz jetzt 4 g Natriumacetat zugesetzt und der pH-Wert der Färbeflotte mit Essigsäure auf 4,5 eingestellt wird. Die resultierende Färbung ist praktisch farbstärke- und farbtongleich, der Farbstoff hat sich bei pH 10 praktisch nicht zersetzt.

### Beispiel 2

a) 29,3 g N,N-Di-n-butyl-4-amino-3-nitro-benzamid werden in 100 ml 30%iger Essigsäure mit 32,7 g 40%iger Nitrosylschwefelsäure bei 10 - 15°C diazotiert, und die Diazolösung wird entsprechend den Angaben in Beispiel la auf 1-Methyl-4-hydroxy-2-chinolon gekuppelt. Der angefallene Farbstoff wird abgesaugt, mit Wasser gewaschen, trockengeblasen und anschließend aus 200 ml Methanol umkristallisiert. Es werden 32 g des Farbstoffs der Formel Ic 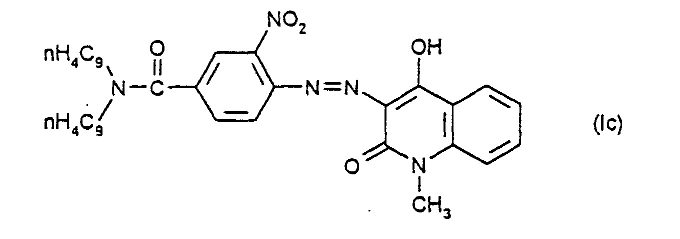 erhalten, der sich in Essigsäureethylester mit gelber Farbe löst, bei 116 - 119°C schmilzt und in Phthalsäurediethylester bei 433 nm sein Absorptionsmaximum hat.
b) 20 g einer 30%igen Flüssigpräparation des Farbstoffs der Formel Ic werden in einer Druckpaste eingerührt, die 45 g Johannisbrotkernmehl, 6 g 3-nitrobenzolsulfonsaures Natrium und 3 g Zitronensäure auf 1000 g enthält. Mit dieser Druckpaste wird ein Polyestergewebe mustermäßig bedruckt, getrocknet und im Spannrahmen 40 Sekunden bei 195°C fixiert. Nach anschließendem Spülen, Seifen, erneutem Spülen und Trocknen erhält man einen farbstarken gelben Druck mit hervorragenden Echtheitseigenschaften.

In den nachfolgenden Tabellen sind weitere erfindungsgemäße Farbstoffe angegeben, die auf Polyester ebenfalls farbstarke gelbe Färbungen mit hervorragenden Lichtechtheiten und sehr guten sonstigen coloristischen Eigenschaften liefern.

Für die Verbindungen in der Tabelle I gilt die allgemeine Formel Id.

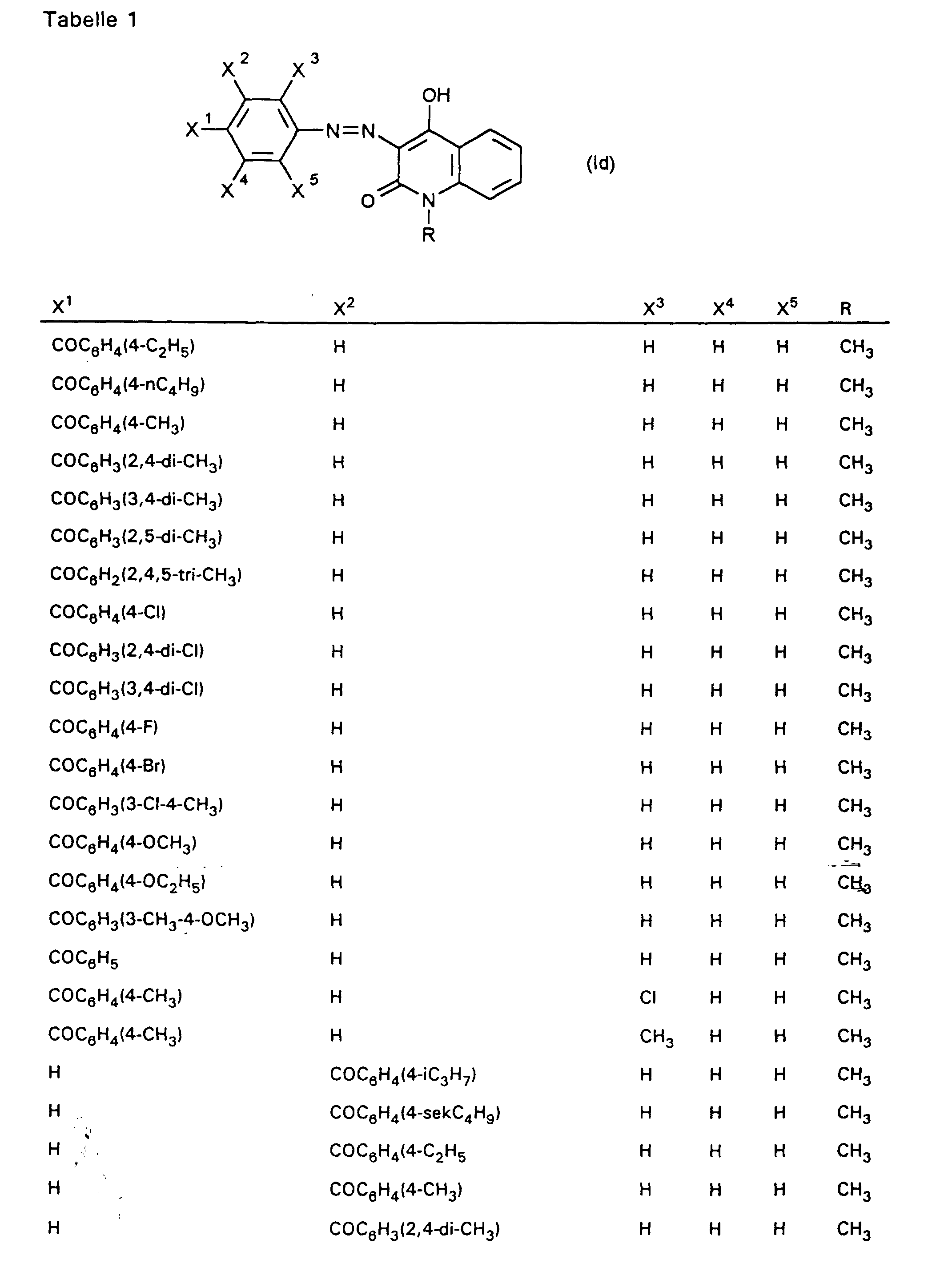

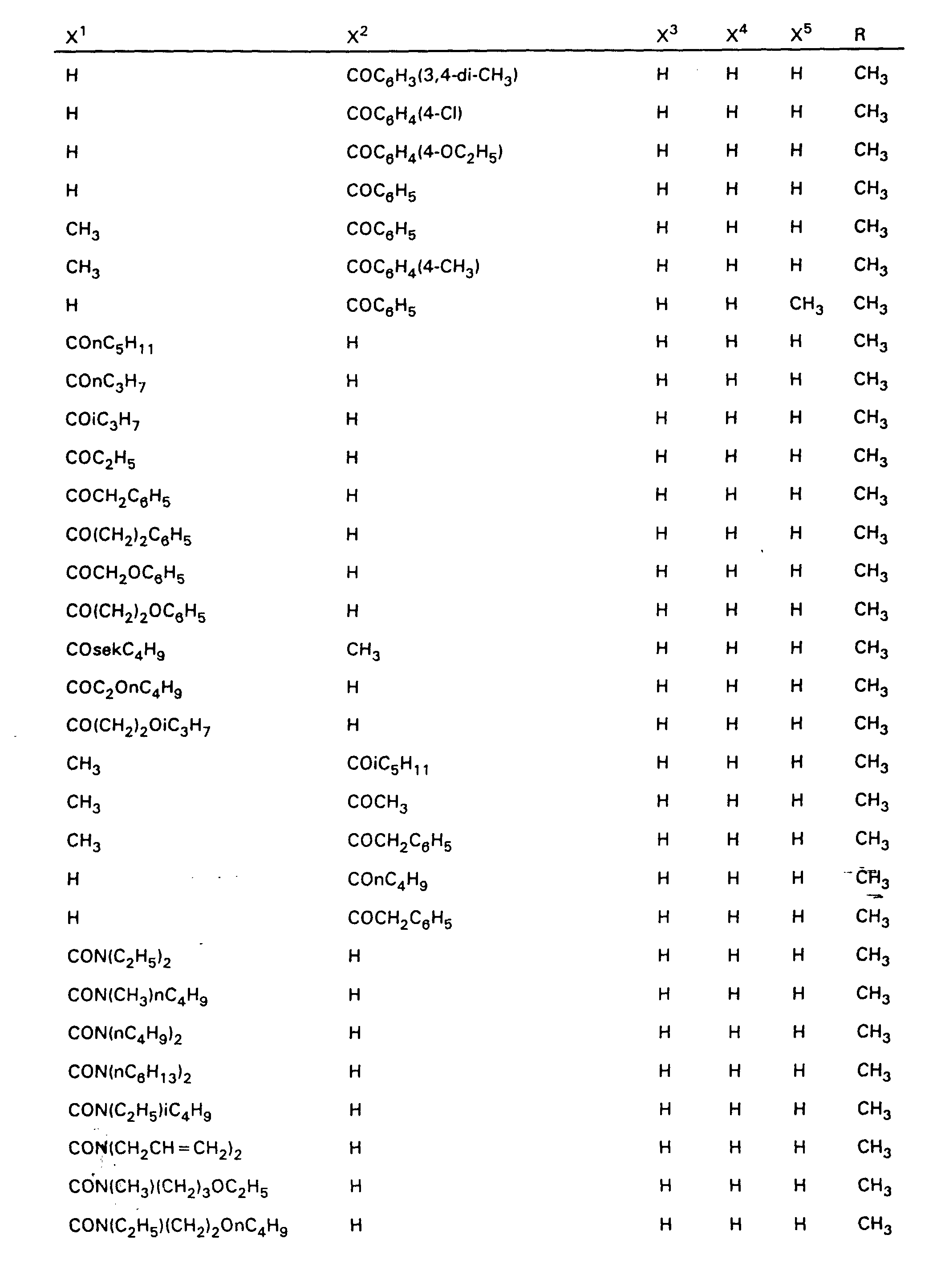

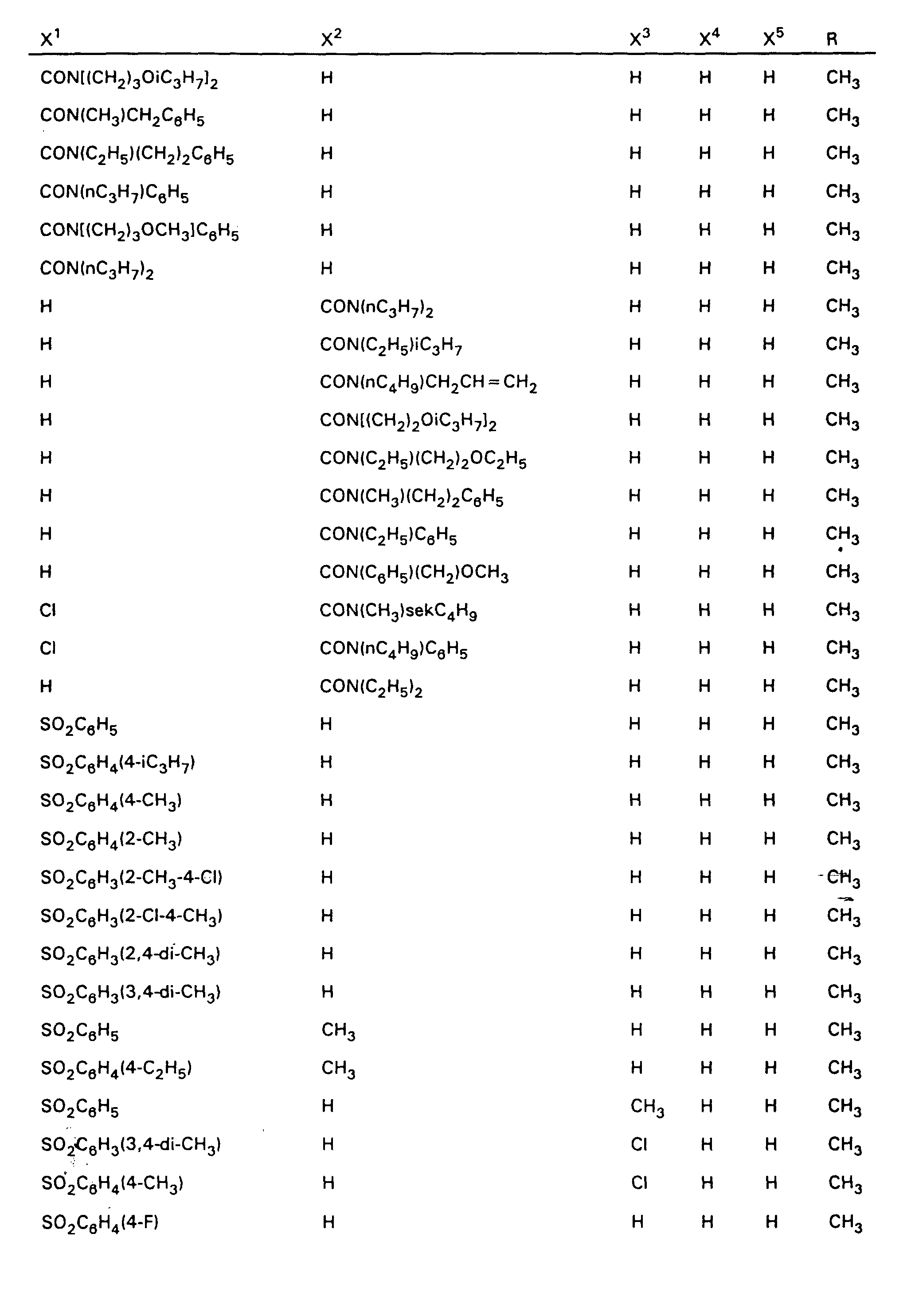

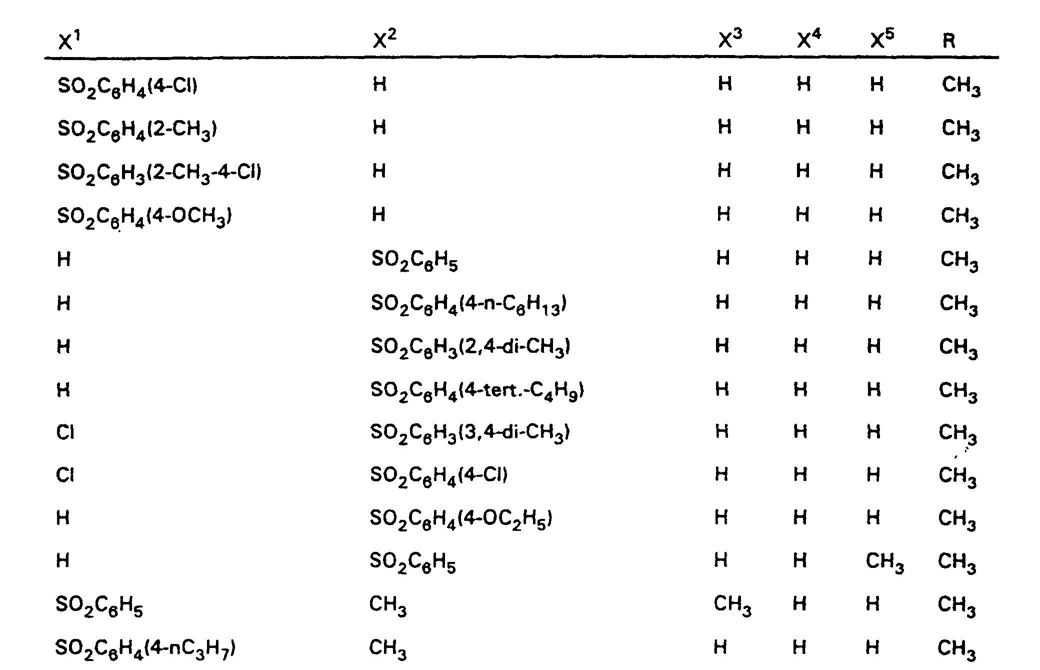

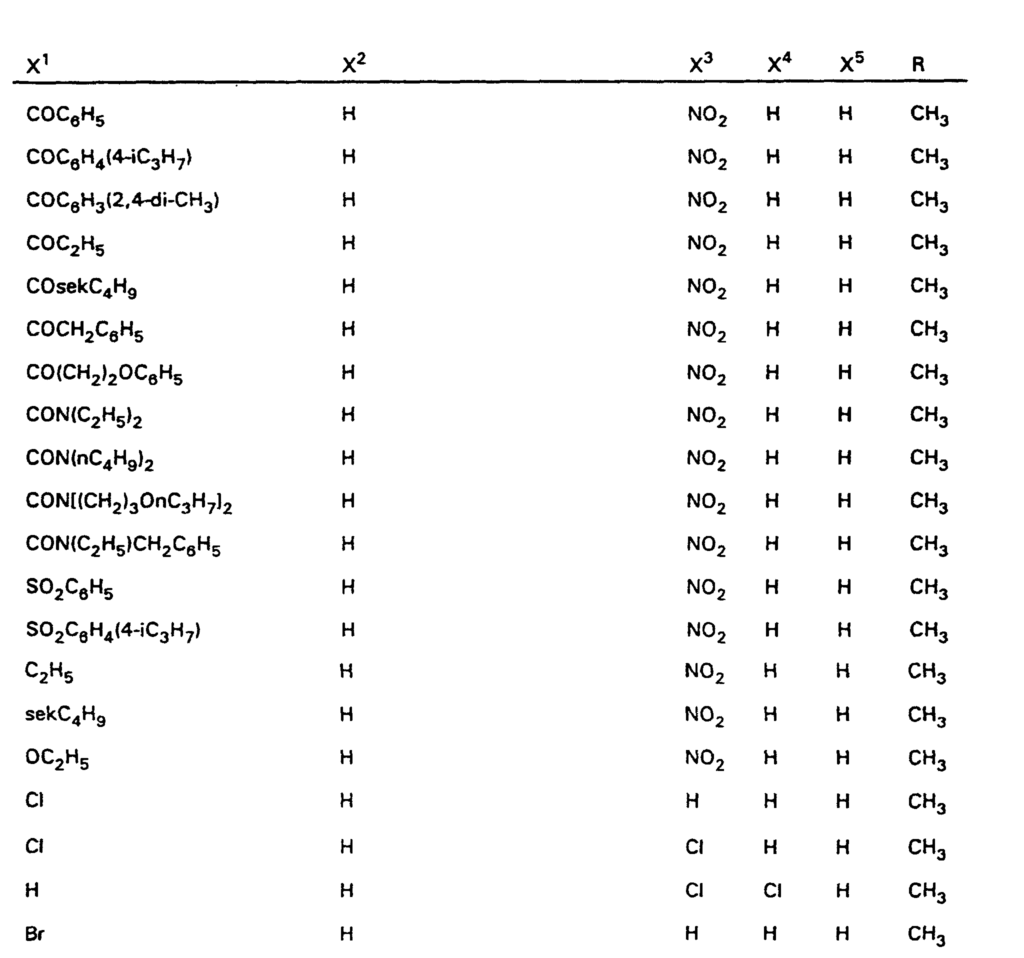

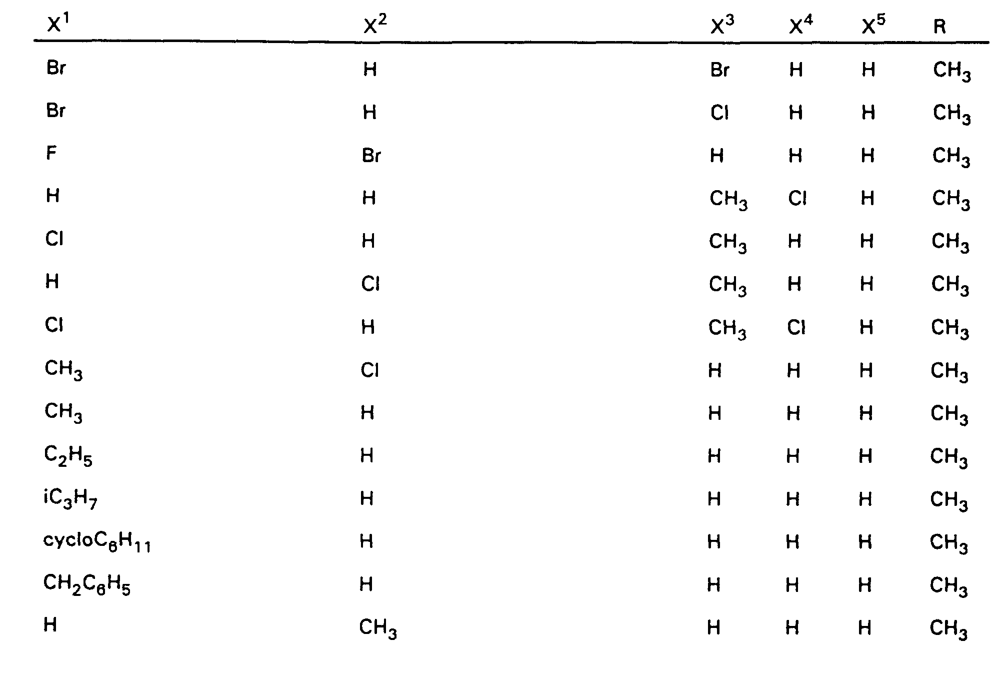

Für die Verbindungen der Tabelle II gilt die allgemeine Formel le.

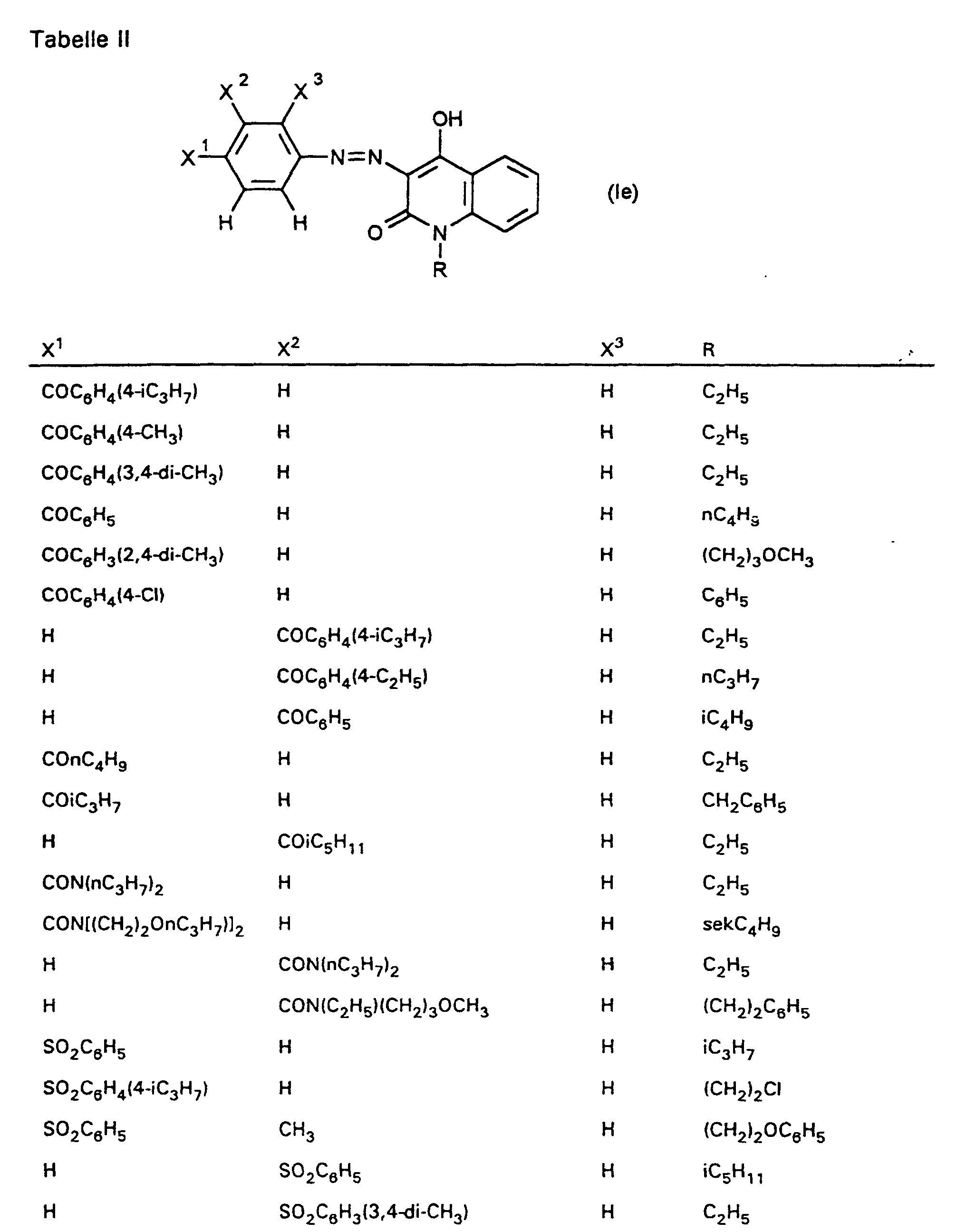

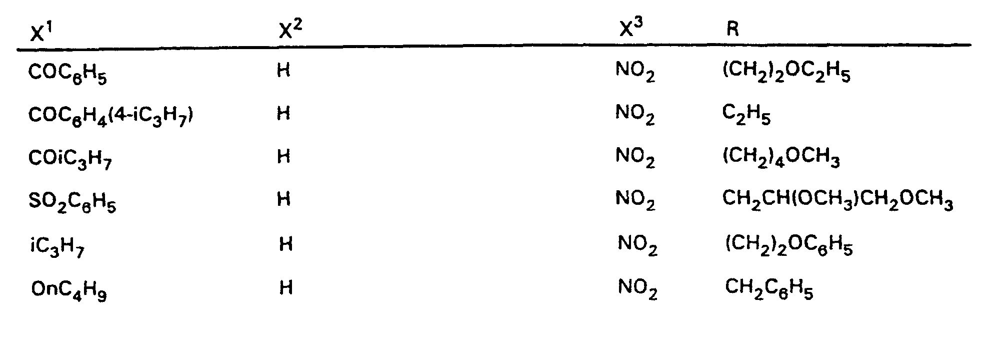

Für die Verbindungen der Tabelle III gilt die allgemeine Formel If.

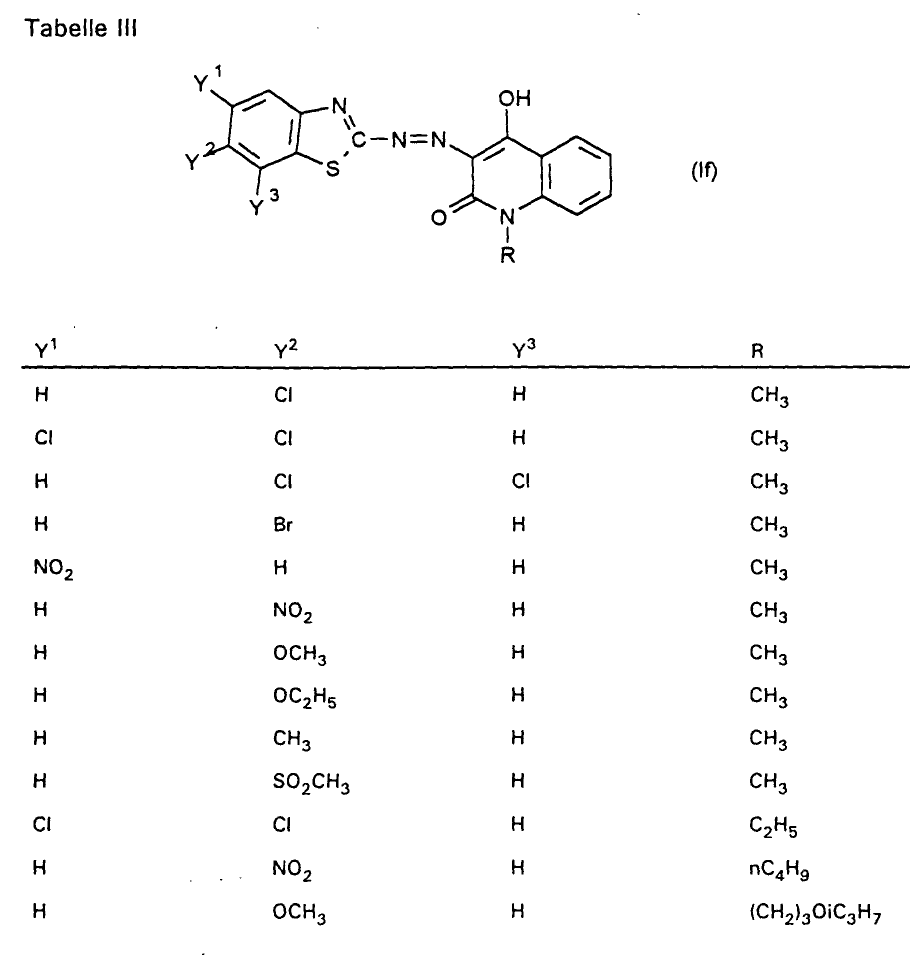

## Patentansprüche

1. Hydroxychinolon-Monoazofarbstoffe der allgemeinen Formel I, 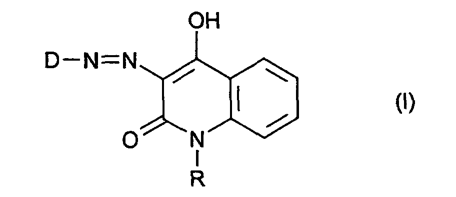 in der
R für (C₁-C₆)-Alkyl, Benzyl oder Phenyl steht oder für (C₂-C₄)-Alkyl steht, das durch Chlor, Brom, (C₁-C₄)-Alkoxy, Phenyl, Phenoxy, durch Methyl, Chlor oder Methoxy mono- oder disubstituiertes Phenyl, oder durch Methyl, Chlor oder Methoxy mono- oder disubstituiertes Phenoxy mono- oder disubstituiert ist;
D für Benzthiazol-2-yl, durch Chlor, Brom, Nitro, Methoxy, Ethoxy, Methyl oder Methylsulfonyl monosubstituiertes oder durch Chlor disubstituiertes Benzthiazol-2-yl oder für einen Phenylrest der allgemeinen Formel II 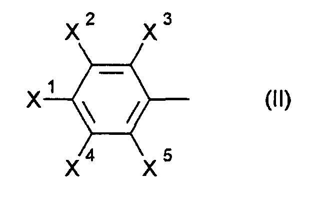 steht;
einer der beiden Reste X¹ und X² für Wasserstoff, Chlor, Brom, Methyl;
((C₁-C₆)-Alkyl)carbonyl, substituiertes ((C₁-C₆)-Alkyl)-carbonyl, Cyclohexylcarbonyl, Phenylcarbonyl, substituiertes Phenylcarbonyl; Phenylsulfonyl, substituiertes Phenylsulfonyl;
N-((C₁-C₆)-Alkyl)aminocarbonyl, im Alkylrest substituiertes N-((C₁-C₆)-Alkyl)aminocarbonyl, N-Cyclohexylaminocarbonyl, N-Allylaminocarbonyl, N-Phenylaminocarbonyl, im Phenylrest substituiertes N-Phenylaminocarbonyl;
N,N-Di-((C₁-C₆)-alkyl)aminocarbonyl, in einem der beiden Alkylreste substituiertes N,N-Di-((C₁-C₆)-alkyl)aminocarbonyl, in beiden Alkylresten substituiertes N,N-Di-((C₁-C₆)-alkyl)aminocarbonyl, N-Phenyl-N-((C₁-C₆)-alkyl)aminocarbonyl, im Alkylrest substituiertes N-Phenyl-N-((C₁-C₆)-alkyl)aminocarbonyl, im Phenylrest substituiertes N-Phenyl-N-((C₁-C₆)-alkyl)aminocarbonyl, im Alkylrest und im Phenylrest substituiertes N-Phenyl-N-((C₁-C₆)alkyl)aminocarbonyl, N,N-Diallylaminocarbonyl, N-Allyl-N-((C₁-C₆)-alkyl)aminocarbonyl, im Alkylrest substituiertes N-Allyl-N-((C₁-C₆)-alkyl)aminocarbonyl, N-Allyl-N-phenylaminocarbonyl, im Phenylrest substituiertes N-Allyl-N-phenylaminocarbonyl, N,N-Dicyclohexylaminocarbonyl, N-Cyclohexyl-N-((C₁-C₆)-alkyl)aminocarbonyl, im Alkylrest substituiertes N-Cyclohexyl-N-((C₁-C₆)-alkyl)aminocarbonyl, N-Cyclohexyl-N-phenylaminocarbonyl, im Phenylrest substituiertes N-Cyclohexyl-N-phenylaminocarbonyl, N-Cyclohexyl-N-allylaminocarbonyl steht;
und der andere der beiden Reste X¹ und X² für Wasserstoff, Chlor, Brom oder Methyl steht und X¹ zusätzlich auch für (C₂-C₄)-Alkyl, Fluor, Phenyl, Benzyl, Cyclohexyl oder (C₂-C₄)-Alkoxy steht;
X³ für Wasserstoff, Chlor, Brom, Nitro oder Methyl steht;
X⁴ und X⁵ unabhängig voneinander für Wasserstoff, Chlor oder Methyl stehen; wobei mindestens einer der Reste X¹, X², X³, X⁴ und X⁵ eine andere Bedeutung als Wasserstoff hat und wobei, wenn gleichzeitig X³ für Nitro und X², X⁴ und X⁵ für Wasserstoff stehen, X¹ eine andere Bedeutung als Wasserstoff, Chlor, Brom, Methyl oder Acetyl hat und wobei der Phenylrest der allgemeinen Formel II nicht für 3,4-Dichlorphenyl stehen kann.

2. Monoazofarbstoffe der allgemeinen Formel I gemäß Anspruch 1, **dadurch gekennzeichnet, daß** R für (C₁-C₄)-Alkyl, bevorzugt für (C₁-C₂)-Alkyl, ganz besonders bevorzugt für Methyl steht.

3. Monoazofarbstoffe der allgemeinen Formel I gemäß Anspruch 1 und/oder 2, **dadurch gekennzeichnet, daß** D für einen Phenylrest der allgemeinen Formel II steht, in der X¹ für (C₁-C₆)-Alkylcarbonyl, substituiertes (C₁-C₆)-Alkylcarbonyl, Phenylcarbonyl, substituiertes Phenylcarbonyl, Phenylsulfonyl, substituiertes Phenylsulfonyl, N,N-Di-((C₁-C₆)-alkyl)aminocarbonyl, in einem der Alkylreste substituiertes N,N-Di-((C₁-C₆)-alkyl)aminocarbonyl, in beiden Alkylresten substituiertes N,N-Di-((C₁-C₆)alkyl)aminocarbonyl steht und X², X³, X⁴ und X⁵ für Wasserstoff stehen.

4. Monoazofarbstoffe der allgemeinen Formel I gemäß Anspruch 1 und/oder 2, **dadurch gekennzeichnet, daß** D für einen Phenylrest der allgemeinen Formel II steht, in der X² für (C₁-C₆)-Alkylcarbonyl, substituiertes (C₁-C₆)-Alkylcarbonyl, Phenylcarbonyl, substituiertes Phenylcarbonyl, Phenylsulfonyl, substituiertes Phenylsulfonyl, N,N-Di-((C₁-C₆)alkyl)aminocarbonyl, in einem der Alkylreste substituiertes N,N-Di-((C₁-C₆)alkyl)aminocarbonyl, in beiden Alkylresten substituiertes N,N-Di-((C₁-C₆)alkyl)aminocarbonyl steht und X¹, X³, X⁴ und X⁵ für Wasserstoff stehen.

5. Monoazofarbstoffe der allgemeinen Formel I gemäß einem oder mehreren der Ansprüche 1 bis 4, **dadurch gekennzeichnet, daß** D für einen Phenylrest der allgemeinen Formel II steht, in der X¹ für Phenylcarbonyl oder substituiertes Phenylcarbonyl steht und X², X³, X⁴ und X⁵ für Wasserstoff stehen, oder in der X² für Phenylcarbonyl oder substituiertes Phenylcarbonyl steht und X¹, X³, X⁴ und X⁵ für Wasserstoff stehen.

6. Monoazofarbstoffe der allgemeinen Formel I gemäß Anspruch 1 und/oder 2, **dadurch gekennzeichnet, daß** D für einen Phenylrest der allgemeinen Formel II steht, in der X¹ für Phenylcarbonyl, substituiertes Phenylcarbonyl, N,N-Di-((C₁-C₆)-alkyl)aminocarbonyl, in einem Alkylrest substituiertes N,N-Di-((C₁-C₆)-alkyl)aminocarbonyl, in beiden Alkylresten substituiertes N,N-Di-((C₁-C₆)-alkyl)-aminocarbonyl steht, X³ für Nitro steht und X², X⁴ und X⁵ für Wasserstoff stehen.

7. Verfahren zur Herstellung von Monoazofarbstoffen der allgemeinen Formel I gemäß einem oder mehreren der Ansprüche 1 bis 6, **dadurch gekennzeichnet, daß** man ein Amin der allgemeinen Formel III,
D-NH₂ (III)
worin D wie in den Ansprüchen 1 bis 6 angegeben definiert ist, diazotiert und auf eine Verbindung der allgemeinen Formel IV, 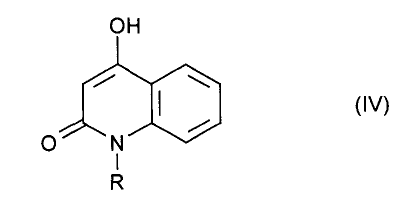 worin R wie in den Ansprüchen 1 bis 6 angegeben definiert ist, kuppelt.

8. Verwendung von Farbstoffen der allgemeinen Formel I gemäß einem oder mehreren der Ansprüche 1 bis 6 zum Färben und Bedrucken von hydrophoben synthetischen Materialien.

9. Verwendung gemäß Anspruch 8, **dadurch gekennzeichnet, daß** bei pH 8 bis 11 gefärbt wird.

## Claims

1. A hydroxyquinolone monoazo dyestuff of the formula I 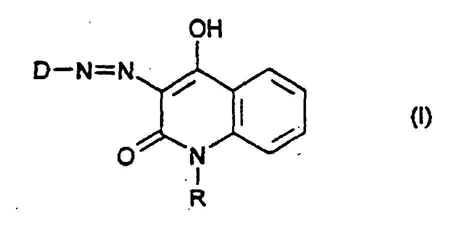 in which
R is (C₁-C₆)-alkyl, benzyl or phenyl, or is (C₂-C₄)-alkyl, which is mono- or disubstituted by chlorine, bromine, (C₁-C₄)-alkoxy, phenyl, phenoxy, phenyl which is mono- or disubstituted by methyl, chlorine or methoxy or phenoxy which is mono- or disubstituted by methyl, chlorine or methoxy;
D is benzothiazol-2-yl or benzothiazol-2-yl which is monosubstituted by chlorine, bromine, nitro, methoxy, ethoxy, methyl or methylsulfonyl or disubstituted by chlorine, or is a phenyl radical of the formula II 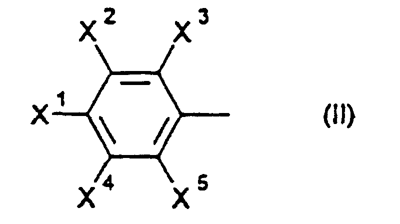
one of the two radicals X¹ and X² is hydrogen, chlorine, bromine or methyl;
((C₁-C₆)-alkyl)carbonyl, substituted ((C₁-C₆)-alkyl)-carbonyl, cyclohexylcarbonyl, phenylcarbonyl or substituted phenylcarbonyl;
phenylsulfonyl or substituted phenylsulfonyl;
N- ((C₁-C₆)-alkyl) aminocarbonyl, N- ((C₁-C₆)-alkyl)aminocarbonyl which is substituted in the alkyl radical, N-cyclohexylaminocarbonyl, N-allylaminocarbonyl, N-phenylaminocarbonyl or N-phenylaminocarbonyl which is substituted in the phenyl radical;
N,N-di- ((C₁-C₆) -alkyl) aminocarbonyl, N,N-di-((C₁-C₆)-alkyl)aminocarbonyl which is substituted in one of the two alkyl radicals, N,N-di-((C₁-C₆)-alkyl)aminocarbonyl which is substituted in both alkyl radicals, N-phenyl-N-((C₁-C₆) -alkyl) aminocarbonyl, N-phenyl-N-((C₁-C₆) -alkyl)-aminocarbonyl which is substituted in the alkyl radical, N-phenyl-N-((C₁-C₆)-alkyl)aminocarbonyl which is substituted in the phenyl radical, N-phenyl-N-((C₁-C₆)-alkyl)aminocarbonyl which is substituted in the alkyl radical and in the phenyl radical, N,N-diallylaminocarbonyl, N-allyl-N-((C₁-C₆)-alkyl)aminocarbonyl, N-allyl-N-((C₁-C₆)-alkyl)aminocarbonyl which is substituted in the alkyl radical, N-allyl-N-phenylaminocarbonyl, N-allyl-N-phenylaminocarbonyl which is substituted in the phenyl radical, N,N-dicyclohexylaminocarbonyl, N-cyclohexyl-N-((C₁-C₆)-alkyl)aminocarbonyl, N-cyclohexyl-N-((C₁-C₆)-alkyl)-aminocarbonyl which is substituted in the alkyl radical, N-cyclohexyl-N-phenylaminocarbonyl, N-cyclohexyl-N-phenylaminocarbonyl which is substituted in the phenyl radical or N-cyclohexyl-N-allylaminocarbonyl;
and the other of the two radicals X¹ and X² is hydrogen, chlorine, bromine or methyl, and X¹ additionally is also (C₂-C₄)-alkyl, fluorine, phenyl, benzyl, cyclohexyl or (C₂-C₄)-alkoxy;
X³ is hydrogen, chlorine, bromine, nitro or methyl;
X⁴ and X⁵ independently of one another are hydrogen, chlorine or methyl;
and in which at least one of the radicals X¹, X², X³, X⁴ and X⁵ has a meaning other than hydrogen, and in which, if X³ is nitro and at the same time X², X⁴ and X⁵ are hydrogen, X¹ has a meaning other than hydrogen, chlorine, bromine, methyl or acetyl, and in which the phenyl radical of the formula II may not be 3,4-dichlorophenyl.

2. A monoazo dyestuff of the formula I as claimed in claim 1, in which R is (C₁-C₄)-alkyl, preferably (C₁-C₂)-alkyl, especially preferably methyl.

3. A monoazo dyestuff of the formula I as claimed in claim 1 and/or 2, in which D is a phenyl radical of the formula II in which X¹ is (C₁-C₆)-alkylcarbonyl, substituted (C₁-C₆)-alkylcarbonyl, phenylcarbonyl, substituted phenylcarbonyl, phenylsulfonyl, substituted phenylsulfonyl, N,N-di-((C₁-C₆)-alkyl)aminocarbonyl, N,N-di-((C₁-C₆)-alkyl)aminocarbonyl which is substituted in one of the alkyl radicals, N,N-di-((C₁-C₆)-alkyl)-aminocarbonyl which is substituted in both alkyl radicals and X², X³, X⁴ and X⁵ are hydrogen.

4. A monoazo dyestuff of the formula I as claimed in claim 1 and/or 2, in which D is a phenyl radical of the formula II in which X² is (C₁-C₆)-alkylcarbonyl, substituted (C₁-C₆)-alkylcarbonyl, phenylcarbonyl, substituted phenylcarbonyl, phenylsulfonyl, substituted phenylsulfonyl, N,N-di-((C₁-C₆)-alkyl)aminocarbonyl, N,N-di-((C₁-C₆)-alkyl)aminocarbonyl which is substituted in one of the alkyl radicals, N,N-di-((C₁-C₆)-alkyl)aminocarbonyl which is substituted in both alkyl radicals and X¹, X³, X⁴ and X⁵ are hydrogen.

5. A monoazo dyestuff of the formula I as claimed in one or more of claims 1 to 4, in which D is a phenyl radical of the formula II in which X¹ is phenylcarbonyl or substituted phenylcarbonyl and X², X³, X⁴ and X⁵ are hydrogen, or in which X² is phenylcarbonyl or substituted phenylcarbonyl and X¹, X³, X⁴ and X⁵ are hydrogen.

6. A monoazo dyestuff of the formula I as claimed in claim 1 and/or 2, in which D is a phenyl radical of the formula II in which X¹ is phenylcarbonyl, substituted phenylcarbonyl, N,N-di-((C₁-C₆)-alkyl)-aminocarbonyl, N,N-di-((C₁-C₆)-alkyl)aminocarbonyl which is substituted in one alkyl radical, N,N-di-((C₁-C₆)-alkyl)aminocarbonyl which is substituted in both alkyl radicals, X³ is nitro and X², X⁴ and X⁵ are hydrogen.

7. A process for the preparation of a monoazo dyestuff of the formula I as claimed in one or more of claims 1 to 6, which comprises diazotizing an amine of the formula III
D-NH₂ (III)
in which D is defined as stated in claims 1 to 6, and coupling the diazotization product to a compound of the formula IV 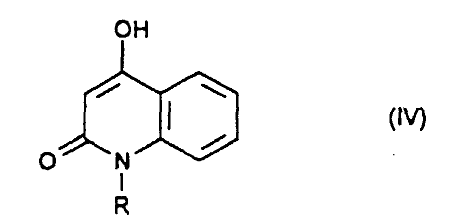 in which R is defined as stated in claims 1 to 6.

8. The use of a dyestuff of the formula I as claimed in one or more of claims 1 to 6 for dyeing and printing hydrophobic synthetic materials.

9. The use as claimed in claim 8, wherein dyeing is carried out at pH 8 to 11.

## Revendications

1. Colorants monoazoïques hydroxyquinolones de formule générale I, 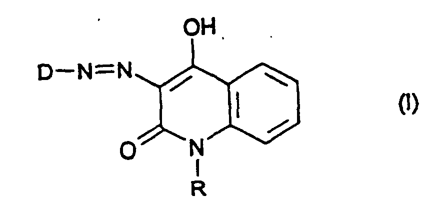 dans laquelle
R désigne un alkyle en C₁-C₆, un benzyle ou un phényle, ou désigne un alkyle en C₂-C₄ qui est mono- ou di-substitué par un chlore, un brome, un alcoxy en C₁-C₄, un phényle, un phénoxy, un phényle mono- ou di-substitué par un méthyle, un chlore ou un méthoxy, ou un phénoxy mono- ou di-substitué par un méthyle, un chlore ou un méthoxy;
D désigne un benzothiazol-2-yle, un benzothiazol-2-yle mono-substitué par un chlore, un brome, un nitro, un méthoxy, un éthoxy, un méthyle ou un méthylsulfonyle ou di-substitué par un chlore, ou un radical phényle de formule générale II 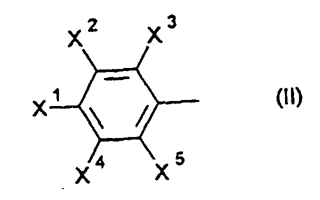
l'un parmi les deux radicaux X¹ et X² désigne un hydrogène, un chlore, un brome, un méthyle ; un ((C₁-C₆)-alkyl)carbonyle, un ((C₁-C₆)-alkyl)carbonyle substitué, un cyclohexylcarbonyle, un phénylcarbonyle, un phénylcarbonyle substitué ; un phénylsulfonyle, un phénylsulfonyle substitué ; un N-((C₁-C₆)-aklyl)-aminocarbonyle, un N-((C₁-C₆)-alkyl)aminocarbonyle substitué dans le radical alkyle, un N-cyclohexylaminocarbonyle, un N-allylaminocarbonyle, un N-phénylaminocarbonyle, un N-phénylaminocarbonyle substitué dans le radical phényle ; un N,N-di-((C₁-C₆)-alkyl)aminocarbonyle, un N,N-di-((C₁-C₆)-alkyl)aminocarbonyle substitué dans l'un parmi les deux radicaux alkyle, un N,N-di-((C₁-C₆)-alkyl)aminocarbonyle substitué dans les deux radicaux alkyle, un N-phényle-N- ((C₁-C₆)-alkyl)aminocarbonyle, un N-phényle-N-((C₁-C₆)-alkyl)aminocarbonyle substitué dans le radical alkyle, un N-phényle-N-((C₁-C₆)-alkyl)aminocarbonyle substitué dans le radical phényle, un N-phényle-N-((C₁-C₆)-alkyl)aminocarbonyle substitué dans le radical alkyle et dans le radical phényle, un N,N-diallylaminocarbonyle, un N-allyle-N-((C₁-C₆)-alkyl)-aminocarbonyle, un N-allyle-N-((C₁-C₆)-alkyl)aminocarbonyle substitué dans le radical alkyle, un N-allyle-N-phényl-aminocarbonyle, un N-allyle-N-phényl-aminocarbonyle substitué dans le radical phényle, un N,N-dicyclohexylaminocarbonyle, un N-cyclohexyl-N-((C₁-C₆)-alkyl)aminocarbonyle, un N-cyclohexyl-N-((C₁-C₆)-alkyl)aminocarbonyle substitué dans le radical alkyle, un N-cyclohexyl-N-phénylaminocarbonyle, un N-cyclohexyl-N-phénylaminocarbonyle substitué dans le radical phényle, un N-cyclohexyl-N-allyl-aminocarbonyle ;
et l'autre radical parmi les deux radicaux X¹ et X² désigne un hydrogène, un chlore, un brome ou un méthyle et X¹ désigne en outre également un alkyle en (C₂-C₄), un fluor, un phényle, un benzyle, un cyclohexyle ou un alkoxy en (C₂-C₄) ;
X³ désigne un hydrogène, un chlore, un brome, un nitro ou un méthyle ;
X⁴ et X⁵ désignent, indépendamment l'un de l'autre, un hydrogène, un chlore ou un méthyle ;
où au moins l'un des radicaux X¹, X², X³, X⁴ et X⁵ a une signification autre qu'un hydrogène et où, lorsque X³ désigne un nitro et X² , X⁴ et X⁵ désignent simultanément un hydrogène, X¹ a une signification autre qu'un hydrogène, un chlore, un brome, un méthyle ou un acétyle, et où le radical phényle de formule générale II ne peut pas désigner un 3,4-dichlorophényle.

2. Colorants monoazoïques de formule générale I selon la revendication 1, **caractérisés en ce que** R désigne un alkyle en (C₁-C₄), de préférence un alkyle en (C₁-C₂), tout particulièrement préférablement un méthyle.

3. Colorants monoazoïques de formule générale I selon la revendication 1 et/ou 2, **caractérisés en ce que** D désigne un radical phényle de formule générale II, dans laquelle X¹ désigne un (C₁-C₆)alkylcarbonyle, un (C₁-C₆)alkylcarbonyle substitué, un phénylcarbonyle, un phénylcarbonyle substitué, un phénylsulfonyle, un phénylsulfonyle substitué, un N,N-di- ((C₁-C₆)alkyl)aminocarbonyle, un N,N-di- ((C₁-C₆)alkyl)aminocarbonyle substitué dans l'un des radicaux alkyle, un N,N-di-((C₁-C₆)alkyl)aminocarbonyle substitué dans les deux radicaux alkyle, et X², X³, X⁴ et X⁵ désignent un hydrogène.

4. Colorants monoazoïques de formule générale I selon la revendication 1 et/ou 2, **caractérisés en ce que** D désigne un radical phényle de formule générale II, dans laquelle X² désigne un (C₁-C₆) alkylcarbonyle, un (C₁-C₆) alkylcarbonyle substitué, un phénylcarbonyle, un phénylcarbonyle substitué, un phénylsulfonyle, un phénylsulfonyle substitué, un N,N-di-((C₁-C₆)alkyl) aminocarbonyle, un N,N-di-((C₁-C₆)alkyl)aminocarbonyle substitué dans l'un des radicaux alkyle, un N,N-di-((C₁-C₆)alkyl)aminocarbonyle substitué dans les deux radicaux alkyle, et X¹, X³, X⁴ et X⁵ désignent un hydrogène.

5. Colorants monoazoïques de formule générale I selon l'une ou plusieurs des revendications 1 à 4, **caractérisés en ce que** D désigne un radical phényle de formule générale II, dans laquelle X¹ désigne un phénylcarbonyle ou un phénylcarbonyle substitué, et X², X³, X⁴ et X⁵ désignent un hydrogène, ou dans laquelle X² désigne un phénylcarbonyle ou un phénylcarbonyle substitué, et X¹, X³, X⁴ et X⁵ désignent un hydrogène.

6. Colorants monoazoïques de formule générale I selon la revendication 1 et/2, **caractérisés en ce que** D désigne un radical phényle de formule générale II, dans laquelle X¹ désigne un phénylcarbonyle, un phénylcarbonyle substitué, un N,N-di-((C₁-C₆)-alkyl)-aminocarbonyle, un N,N-di-((C₁-C₆)-alkyl)aminocarbonyle substitué dans l'un des radicaux alkyle, un N,N-di-((C₁-C₆)-alkyl)aminocarbonyle substitué dans les deux radicaux alkyle, X³ désigne un nitro et X², X⁴ et X⁵ désignent un hydrogène.

7. Procédé de préparation de colorants monoazoïques de formule générale I selon l'une ou plusieurs des revendications 1 à 6, **caractérisé en ce qu'**une amine de formule générale III,
D-NH₂ (III)
dans laquelle D est défini comme indiqué dans les revendications 1 à 6, est di-azotée et couplée sur un composé de formule générale IV, 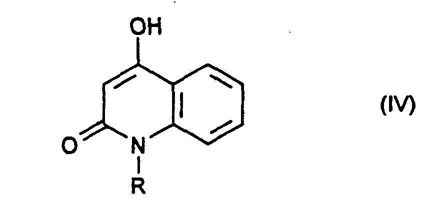 dans laquelle R est défini comme indiqué dans les revendications 1 à 6.

8. Utilisation de colorants de formule générale I selon l'une ou plusieurs des revendications 1 à 6 pour la teinture et l'impression de matières synthétiques hydrophobes.

9. Utilisation selon la revendication 8, **caractérisée en ce que** l'on procède à la teinture à un pH de 8 à 11.
